# EUROPÄISCHE PATENTSCHRIFT

(11) **EP 2 659 532 B1**
(45) Veröffentlichungstag und Bekanntmachung des Hinweises auf die Patenterteilung: **16.08.2017**
(21) Anmeldenummer: 11782612.3
(22) Anmeldetag: 14.11.2011
(51) Int. Cl.: H01M 2/20, H01M 2/30

(54) **BATTERIEMODUL MIT VERRINGERTER GESAMTINDUKTIVITÄT**
BATTERY MODULE HAVING REDUCED TOTAL INDUCTANCE
MODULE DE BATTERIE À INDUCTANCE GLOBALE RÉDUITE

(30) Priorität: 29.12.2010 DE 102010064303
(43) Veröffentlichungstag der Anmeldung: 06.11.2013
(73) Patentinhaber: Robert Bosch GmbH, 70442 Stuttgart (DE)
(72) Erfinder: KESSLER, Martin, 73527 Schwaebisch Gmuend (DE); FEUERSTACK, Peter, 71642 Ludwigsburg (DE); WEISSENBORN, Erik, 70374 Stuttgart (DE)
(86) Internationale Anmeldenummer: PCT/EP2011/070014
(87) Internationale Veröffentlichungsnummer: WO 2012/089394

(56) Entgegenhaltungen:
- EP-A1- 2 200 111
- WO-A1-92/12563
- JP-A- 2003 242 956
- US-B1- 6 307 151

## Beschreibung

Die Erfindung betrifft ein Batteriemodul.

### Stand der Technik

Um ein Batteriemodul mit hoher Kapazität zu bilden können mehrere Batteriezellen in Reihe geschaltet werden. In den meisten Einsatzgebieten von Batteriemodulen wird, abgesehen von einem geringen Ripple-Anteil, näherungsweise Gleichstrom entnommen beziehungsweise eingespeist. Aus der US 6 307 151 ist ein Batteriesystem bekannt, in welcher ein positiver Pol einer ersten zylinderförmigen Batterie einen negativen Pol einer benachbarten, zweiten zylinderförmigen Batterie kontaktiert. Eine leitfähige Hülle dient zur Aufnahme der zylinderförmigen Batterien. Aus der US 5 642 275 A ist ein Batteriesystem mit integrierter Wechselrichterfunktion bekannt, bei dem eine Reihe von Leistungsschaltern mit separaten Gleichspannungsquellen in Form von Batterien vorgesehen ist. Derartige Batteriesysteme, welche häufig auch als Multilevel Cascaded Inverter bezeichnet werden, ermöglichen die Realisierung ein- oder mehrphasiger Systeme, welche einen größeren Wirkungsgrad und eine höhere Ausfallsicherheit aufweisen als konventionelle Wechselrichteranordnungen.

Wird ein derartiges Batteriesystem aber zum Beispiel zur Steuerung einer elektrischen Maschine eingesetzt, ist zur Variation der Strangspannung ein schneller Wechsel der Stromführung durch die Gleichspannungsquellen bzw. an den Gleichspannungsquellen vorbei erforderlich. Mit steigendem Wechselanteil des Stroms wächst aber auch der Einfluss der Induktivität der Gleichspannungsquellen und damit bei Einsatz von Batteriemodulen der Einfluss der Induktivität der Verschaltung der einzelnen Batteriezellen. Insbesondere führen verteilte Modul-Induktivitäten in Kombination mit hohen Strömen bei Schaltvorgängen zu hohen Verlustenergien, welche in den Leistungsschaltern in Wärme umgesetzt werden.

Durch das wiederholte Auftreten von Schaltvorgängen führt dies zu hohen Verlustleistungen in den Schaltern und damit zu einem reduzierten Wirkungsgrad des Batteriesystems. In einigen Anwendungsfällen kann ein zu hoher induktiver Anteil der Impedanz eines Batteriemoduls auch einen zusätzlichen Pufferkondensator erforderlich machen.

Einhergehend mit verteilten Modul-Induktivitäten werden bei jedem Schaltvorgang auch elektromagnetische Felder emittiert, welche ohne Abhilfemaßnahmen zu Störungen benachbarter Elektronik-Komponenten führen könnten, so dass häufig aufwendige zusätzliche Schaltungsmaßnahmen zur Einhaltung von EMV-Vorschriften (EMV = Elektromagnetische Verträglichkeit) erforderlich sind.

### Offenbarung der Erfindung

Die vorliegende Erfindung schafft ein Batteriemodul nach Anspruch 1.

### Vorteile der Erfindung

Die Gesamtinduktivität eines Batteriemoduls wird einerseits durch die Induktivitäten der einzelnen Batteriezellen (Zellinduktivitäten) und andererseits durch die Induktivität der Verschaltung dieser Batteriezellen bestimmt. Die Erfindung basiert auf der Grundidee, bei einem Batteriemodul, welches mehrere in Reihe geschaltete Batteriezellen umfasst, die Verschaltung der einzelnen Batteriezellen derart zu gestalten, dass der Beitrag der Verschaltung an der Gesamtinduktivität des Batteriemoduls einen gegenüber den Zellinduktivitäten vernachlässigbaren Wert annimmt.

Dies wird erfindungsgemäß im Wesentlichen dadurch erreicht, dass das zweite Polanschluss-Verbindungselement flächig ausgestaltet und derart angeordnet ist, dass seine Oberfläche beabstandet und im Wesentlichen parallel zu den Anschluss-Verbindungselementen verläuft und diese zumindest in Teilbereichen überdeckt und dass das erste Polanschluss-Verbindungselement im Betrieb des Batteriemoduls von einem Strom durchflossen wird, dessen Richtung im Wesentlichen entgegengesetzt zu einer Stromflussrichtung in den Anschluss-Verbindungselementen ist.

Durch die flächige Stromführung und die durch die bei entgegengesetzter Stromrichtung teilweise Überdeckung bewirkte magnetische Wechselwirkung zwischen den Anschluss-Verbindungselementen und dem zweiten Polanschluss-Verbindungselement ergibt sich eine deutliche Reduzierung der aus der Verschaltung resultierenden Induktivität. Dies wiederum führt zu einer reduzierten Verlustleistung der Leistungsschalter und damit zu einem höheren Wirkungsgrad des Batteriesystems. Der erfindungsgemäße Aufbau des Batteriemoduls konzentriert das Magnetfeld auf den Bereich zwischen den Verbindungselementen und dem zweiten Polanschluss-Verbindungselement und minimiert damit die Emission von elektromagnetischen Störungen.

Diese Effekte können noch verstärkt werden, indem die Anschluss-Verbindungselemente ebenfalls flächig ausgestaltet sind und das zweite Polanschluss-Verbindungselement derart angeordnet ist, dass seine Oberfläche im Wesentlichen parallel zu den Oberflächen der Anschluss-Verbindungselemente verläuft.

Die ohmschen Verluste der Zellverschaltung teilen sich in Gleich- und Wechselstromverluste auf. Durch die flächige Stromführung sind bereits geringe Materialdicken bei den Polanschluss-Verbindungselementen ausreichend, um vernachlässigbare Widerstandswerte für Gleichstrom zu erreichen, so dass sich das erfindungsgemäße Batteriemodul nicht nur durch eine niedrige Induktivität der Verschaltung, sondern auch durch eine äußerst niederohmige Verbindung der Batteriezellen auszeichnet.

Die in Relation zur Breite der Verbindungselemente geringe Materialdicke ergibt weiter einen günstigen Querschnitt zur Reduzierung des Einflusses des Skineffekts, so dass das erfindungsgemäße Batteriemodul auch einen reduzierten Verlustwiderstand bei Wechselstrombetrieb aufweist.

Die oben genanten Effekte können weiter verbessert werden, indem die Oberfläche des zweiten Polanschluss-Verbindungselements mindestens 80% der Oberflächen der Anschluss-Verbindungselemente überdeckt. Eine weitere Verbesserung wird erzielt, wenn die Oberfläche des zweiten Polanschluss-Verbindungselements die Oberflächen der Anschluss-Verbindungselemente vollständig überdeckt.

Zusätzlich kann auch das erste Polanschluss-Verbindungselement flächig ausgestaltet sein. Eine weitere Reduzierung der parasitären Induktivitäten und Widerstände des Batteriemoduls kann dann dadurch erreicht werden, dass die Oberfläche des zweiten Polanschluss-Verbindungselements auch parallel zu der Oberfläche des ersten Polanschluss-Verbindungselements verläuft und auch dieses zumindest in einem Teilbereich überdeckt, so dass sich auch zwischen den beiden Polanschluss-Verbindungselements eine vorteilhafte magnetische Wechselwirkung ergibt.

Eine fertigungstechnisch besonders einfache Realisierung ist möglich, wenn das erste Polanschluss-Verbindungselement einstückig mit dem ersten Polanschluss und/oder das zweite Polanschluss-Verbindungselement einstückig mit dem zweiten Polanschluss ausgestaltet sind.

Um auch im Bereich der Polanschlüsse eine niederinduktive Verschaltung zu erreichen, kann der erste Polanschluss in der Nähe des zweiten Polanschlusses, insbesondere benachbart zum zweiten Polanschluss angeordnet sein. Besonders bevorzugt überdeckt dabei der erste Polanschluss den zweiten Polanschlusses zumindest in einem Teilbereich.

Um die magnetische Wechselwirkung zwischen den Anschluss-Verbindungselementen und dem zweiten Polanschluss-Verbindungselement und/oder zwischen dem ersten und dem zweiten Polanschluss-Verbindungselement möglichst wirksam zu gestalten, ist der Abstand zwischen diesen Einheiten möglichst gering zu halten. Dies kann in einfacher Weise dadurch realisiert werden, dass zwischen dem zweiten Polanschluss-Verbindungselement und den Anschluss-Verbindungselementen und/oder zwischen dem ersten und dem zweiten Polanschluss-Verbindungselement eine Isolationsschicht angeordnet ist.

Für einige Anwendungsfälle ist es erforderlich, Anschlüsse von einzelnen Batteriezellen z.B. für Sensoranbindung, Dämpfungsglieder oder Balancing-Schaltungen kontaktieren zu können. Um eine vollständige Verdeckung derartiger Anschlüsse durch Anschluss-Verbindungselemente und/oder die Polanschluss-Verbindungselemente zu vermeiden, können diese gemäß einer Ausführungsform der Erfindung zumindest teilweise derart ausgestaltet sein, dass eine zusätzliche externe Kontaktierung zumindest eines Anschlusses einer Batteriezelle möglich ist. Der erfindungsgemäße Aufbau des Batteriemoduls hat dabei den Vorteil, dass auch derartige externen Schaltungskomponenten äußerst niederohmig und induktionsarm anbindbar sind.

Zur Abdeckung des Batteriemoduls nach außen hin kann ein Deckel vorgesehen sein, welcher die Polanschluss-Verbindungselemente auf der den Batteriezellen abgewandten Seite abdeckt.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Es zeigen:
- Fig. 1: eine schematische Darstellung von Batteriezellen eines erfindungsgemäßen Batteriemoduls nach dem Kontaktieren der Anschluss-Verbindungselemente,
- Fig. 2: eine schematische Darstellung der Batteriezellen gemäß Figur 1 nach dem Aufbringen einer Isolationsschicht,
- Fig. 3: eine schematische Darstellung der Batteriezellen gemäß Figur 1 nach dem Kontaktieren des zweiten Polanschluss-Verbindungselements und
- Fig. 4: eine schematische Darstellung der Batteriezellen gemäß Figur 1 nach dem Aufbringen eines Deckels.

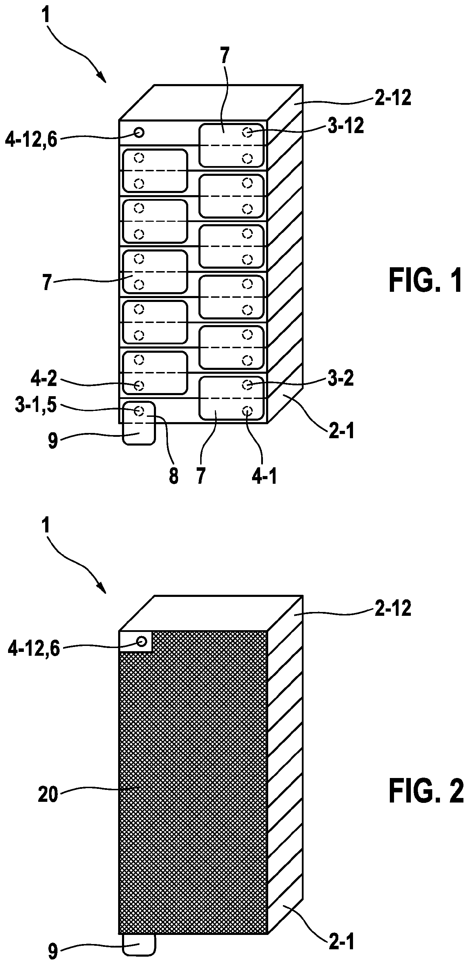

Ein in Figur 1 schematisch dargestelltes Batteriemodul 1 umfasst eine Vielzahl, im dargestellten Ausführungsbeispiel zwölf, Batteriezellen 2-1 bis 2-12, welche vorteilhaft als wiederaufladbare Batteriezellen oder Sekundärbatteriezellen ausgestaltet sind. Dabei sind aus Gründen der Übersichtlichkeit lediglich die beiden äußeren Batteriezellen 2-1 und 2-12 mit Bezugszeichen versehen. Jede Batteriezelle 2 weist einen ersten positiven Anschluss 3 und einen zweiten negativen Anschluss 4 auf. Die einzelnen Batteriezellen 2-1 bis 2-12 sind derart angeordnet, dass die Anschlüsse 3, 4 zwei parallele lineare Reihen bilden, wobei sich jeweils erste Anschlüsse 3 und zweite Anschlüsse 4 abwechseln.

Der erste Anschluss 3-1 der in der Figur unten liegenden Batteriezelle 2-1 und der zweite Anschluss 4-12 der in der Figur oben liegenden Batteriezelle 2-12 dienen als erster (positiver) Pol 5 bzw. zweiter (negativer) Pol 6 des Batteriemoduls 1. Die übrigen Anschlüsse 3 und 4 sind jeweils paarweise mit Hilfe von Anschluss-Verbindungselementen 7 elektrisch verbunden. Dabei ist jeweils ein erster Anschluss 3 einer ersten Batteriezelle 2-i mit einem benachbarten zweiten Anschluss 4 einer zweiten Batteriezelle 2-(i+1) verbunden, so dass sich eine Reihenschaltung der einzelnen Batteriezellen 2 ergibt.

Der als erster Pol 5 des Batteriemoduls 1 dienende Anschluss 3-1 der untersten Batteriezelle 2-1 ist über ein erstes Polanschluss-Verbindungselement 8 mit einem ersten Polanschluss 9 verbunden. Im dargestellten Ausführungsbeispiel ist das erste Polanschluss-Verbindungselement 8 einstückig mit dem zugehörigen ersten Polanschluss 9 ausgestaltet.

Gemäß der dargestellten Ausführungsform sind sowohl die Anschluss-Verbindungselemente 7 als auch das erste Polanschluss-Verbindungselement 8 flächig ausgestaltet. Die Anschluss-Verbindungselemente 7 können dabei, wie dargestellt eine einheitliche äußere Form aufweisen, sie können aber auch unterschiedlich ausgestaltet sein. Vorteilhaft ist es aber, wenn sie eine möglichst große Fläche überdecken.

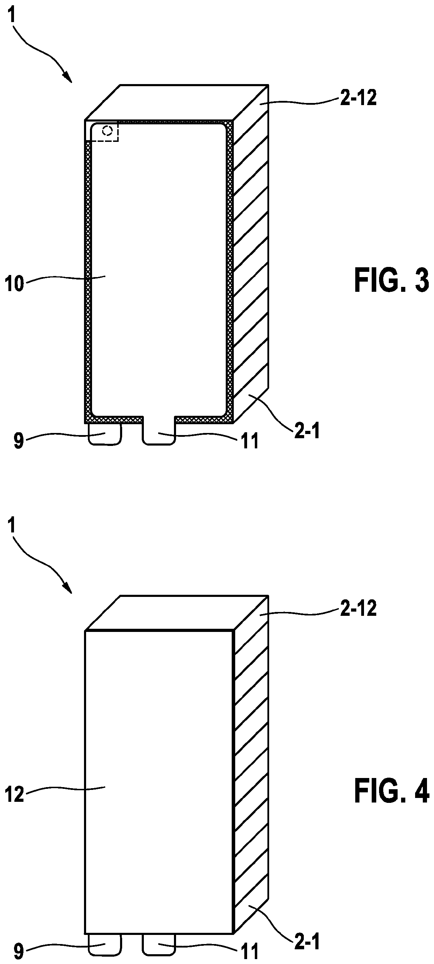

Auf die Anschluss-Verbindungselemente 7 und das erste Polanschluss-Verbindungselement 8 ist eine Isolationsschicht 20 aufgebracht (vgl. Figur 2), welche dazu dient einen vordefinierten Abstand zwischen den Anschluss-Verbindungselementen 7 bzw. dem ersten Polanschluss-Verbindungselement 8 und einem zweiten Polanschluss-Verbindungselement 10 (vgl. Figur 3) herzustellen. Um eine Kontaktierung des als zweiter Pol 6 des Batteriemoduls 1 dienenden zweiten Anschluss 4-12 der in der Figur oben liegenden Batteriezelle 2-12 zu ermöglichen, ist die Isolationsschicht 20 in diesem Bereich ausgeschnitten.

Das zweite Polanschluss-Verbindungselement 10 dient der elektrischen Verbindung des als zweiter Pol 6 des Batteriemoduls 1 dienenden Anschlusses 4-12 der obersten Batteriezelle 2-12 mit einem zweiten Polanschluss 11. Die Polanschlüsse 9 und 11 dienen zur Verbindung des Batteriemoduls 1 mit einer externen Beschaltung, z.B. in Form von Leistungsschaltern. Im dargestellten Ausführungsbeispiel ist das zweite Polanschluss-Verbindungselement 10 einstückig mit dem zugehörigen zweiten Polanschluss 11 ausgestaltet.

Das zweite Polanschluss-Verbindungselement 10 ist erfindungsgemäß flächig ausgestaltet und derart angeordnet, dass seine Oberfläche (durch die Isolationsschicht 20) beabstandet und im Wesentlichen parallel zu den Oberflächen der Anschluss-Verbindungselemente 7 und der Oberfläche des ersten Polanschluss-Verbindungselements 8 verläuft. Dabei werden die Anschluss-Verbindungselemente 7 vollständig und das erste Polanschluss-Verbindungselement 8 zumindest teilweise überdeckt. Das zweite Polanschluss-Verbindungselement 10 wird dabei im Betrieb des Batteriemoduls 1 von einem Strom durchflossen, dessen Richtung im Wesentlichen entgegengesetzt zu einer Stromflussrichtung in den Anschluss-Verbindungselementen 7 und in dem ersten Polanschluss-Verbindungselement 8 ist.

Die flächige Stromführung und die zumindest teilweise Überdeckung des zweiten Polanschluss-Verbindungselements 10 mit den Anschluss-Verbindungselementen 7 und dem ersten Polanschluss-Verbindungselement 8 bewirkt eine magnetische Wechselwirkung zwischen diesen Komponenten. Die entgegengesetzte Stromrichtung hat dabei zur Folge, dass sich die resultierenden Magnetfelder zumindest weitgehend ausgleichen, so dass eine deutliche Reduzierung der aus der Verschaltung resultierenden Induktivität des Batteriemoduls 1 erreicht wird.

Um die Induktivität der Verschaltung weiter zu verringern, sind die beiden Polanschlüsse 9 und 11 benachbart zueinander angeordnet, so dass sie einen möglichst geringen Abstand aufweisen. Alternativ zu der dargestellten Ausführungsform können sich die beiden Polanschlüsse 9 und 11 in einem Teilbereich sogar überdecken, so dass auch in diesem Bereich die vorteilhafte magnetische Wechselwirkung verstärkt ergibt.

Um eine zusätzliche externe Kontaktierung einzelner Anschlüsse 3 und/oder 4 einzelner Batteriezellen 2, z.B. für Sensoren, Dämpfungsglieder oder Balancing-Schaltungen, zu ermöglichen, können einzelne oder auch alle Anschluss-Verbindungselemente 7 und/oder die Polanschluss-Verbindungselemente 8 , 10 auch entsprechende Aussparungen aufweisen.

Auf das zweite Polanschluss-Verbindungselement 10 wird auf der den Batteriezellen 2 abgewandten Seite des Batteriemoduls 1 abschließend ein Deckel 12 zur Abdeckung aufgebracht. dabei wird im Wesentlichen das gesamte Batteriemodul 1 abgedeckt. Nur die zur Kontaktierung einer externen Schaltungskomponente dienenden Polanschlüsse 9 und 11 ragen über den Deckel 12 hinaus.

## Patentansprüche

1. Batteriemodul (1) umfassend
- eine Vielzahl von Batteriezellen (2), welche jeweils einen ersten Anschluss (3) und einen zweiten Anschluss (4) aufweisen,
- Anschluss-Verbindungselemente (7) zum elektrischen Verbinden der Vielzahl von Batteriezellen (2), wobei jedes Anschluss-Verbindungselement (7) einen ersten Anschluss (3) einer ersten Batteriezelle (2-i) mit einembenachbart angeordneten zweiten Anschluss (4) einer zweiten Batteriezelle (2-(i+1)) verbindet, und wobei die Anschluss-Verbindungselemente (7) aufgrund ihrer in Relation zu ihrer Breite geringen Materialdicke flächig ausgestaltet sind;
- einen ersten (9) und einen zweiten Polanschluss (11) zum Verbinden des Batteriemoduls (1) mit einer externen Beschaltung,
- ein erstes Polanschluss-Verbindungselement (8) zum elektrischen Verbinden des ersten Polanschlusses (9) mit einem ersten Pol (5) des Batteriemoduls (1), wobei der erste Pol (5) durch einen ersten Anschluss (3-1) einer Batteriezelle der Vielzahl von Batteriezellen (2-1) gebildet wird, und
- ein zweites Polanschluss-Verbindungselement (10) zum elektrischen Verbinden des zweiten Polanschlusses (11) mit einem zweiten Pol (6) des Batteriemoduls (1), wobei der zweite Pol (6) durch einen zweiten Anschluss (4-12) einer Batteriezelle der Vielzahl von Batteriezellen (2-12) gebildet wird,
wobei das erste Polanschluss-Verbindungselement (8) flächig ausgestaltet ist,
und wobei das zweite Polanschluss-Verbindungselement (10) ebenfalls flächig ausgestaltet und derart angeordnet ist, dass seine Oberfläche beabstandet und parallel zu den Oberflächen der Anschluss-Verbindungselemente (7) und parallel zu der Oberfläche des ersten Polanschluss-Verbindungselements (8) verläuft und die Oberflächen der Anschluss-Verbindungselemente (7) und die Oberfläche des ersten Polanschluss-Verbindungselements (8) zumindest in Teilbereichen überdeckt und dass das zweite Polanschluss-Verbindungselement (10) im Betrieb des Batteriemoduls (1) von einem Strom durchflossen wird, dessen Richtung entgegengesetzt zu einer Stromflussrichtung in den Anschluss-Verbindungselementen (7) und in dem ersten Polanschluss-Verbindungselement (8) ist, wodurch sich die resultierenden Magnetfelder zumindest weitgehend ausgleichen.

2. Batteriemodul nach Anspruch 1, wobei die Oberfläche des zweiten Polanschluss-Verbindungselements (10) die Oberflächen der Anschluss-Verbindungselemente (7) vollständig überdeckt.

3. Batteriemodul nach Anspruch 1 oder 2, wobei das erste Polanschluss-Verbindungselement (8) einstückig mit dem ersten Polanschluss (9) und/oder das zweite Polanschluss-Verbindungselement (10) einstückig mit dem zweiten Polanschluss (11) ausgestaltet ist.

4. Batteriemodul nach einem der vorhergehenden Ansprüche, wobei der erste Polanschluss (9) benachbart zum zweiten Polanschluss (11) angeordnet ist.

5. Batteriemodul nach Anspruch 4, wobei der zweite Polanschluss (11) den ersten Polanschluss (9)zumindest in einem Teilbereich überdeckt.

6. Batteriemodul nach einem der vorhergehenden Ansprüche, wobei zwischen dem zweiten Polanschluss-Verbindungselement (10) und den Anschluss-Verbindungselementen (7) und/oder zwischen dem ersten (8) und dem zweiten Polanschluss-Verbindungselement (10) eine Isolationsschicht (20) angeordnet ist.

7. Batteriemodul nach einem der vorhergehenden Ansprüche, wobei die Anschluss-Verbindungselemente (7) und/oder die Polanschluss-Verbindungselemente (8, 10) zumindest teilweise derart ausgestaltet sind, dass eine zusätzliche externe Kontaktierung zumindest eines Anschlusses (3; 4) einer Batteriezelle (2) möglich ist.

8. Batteriemodul nach einem der vorhergehenden Ansprüche, wobei die Polanschluss-Verbindungselemente (8, 10) auf der den Batteriezellen abgewandten Seite von einem Deckel (12) abgedeckt werden.

## Claims

1. Battery module (1) comprising
• a plurality of battery cells (2) that comprise in each case a first connection (3) and a second connection (4),
• connection connecting elements (7) for electrically connecting the plurality of battery cells (2), wherein each connection connecting element (7) connects a first connection (3) of a first battery cell (2-i) to a second connection (4) of a second battery cell (2-(i+1)), which second connection is adjacent to said first connection, and wherein the connection connecting elements (7) are embodied in a planar manner owing to their low material thickness in relation to their width;
• a first terminal connection (9) and a second terminal connection (11) for connecting the battery module (1) to external circuitry,
• a first terminal connection connecting element (8) for electrically connecting the first terminal connection (9) to a first terminal (5) of the battery module (1), wherein the first terminal (5) is embodied by way of a first connection (3-1) of a battery cell of the plurality of battery cells (2-1), and
• a second terminal connection connecting element (10) for electrically connecting the second terminal connection (11) to a second terminal (6) of the battery module (1), wherein the second terminal (6) is embodied by way of a second connection (4-12) of a battery cell of the plurality of battery cells (2-12),
wherein the first terminal connection connecting element (8) is embodied in a planar manner,
and wherein the second terminal connection connecting element (10) is likewise embodied in a planar manner and arranged in such a manner that the surface thereof extends at a spaced disposition from and parallel to the surfaces of the connection connecting elements (7) and parallel to the surface of the first terminal connection connecting element (8) and covers the surfaces of the connection connecting elements (7) and the surface of the first terminal connection connecting element (8) at least partially, and that during the operation of the battery module (1) a current flows through the second terminal connection connecting element (10), the direction of said current being opposite to a current flow direction in the connection connecting elements (7) and in the first terminal connection connecting element (8), as a result of which the resulting magnetic fields are largely balanced.

2. Battery module according to Claim 1, wherein the surface of the second terminal connection connecting element (10) completely covers the surfaces of the connection connecting elements (7).

3. Battery module according to Claim 1 or 2, wherein the first terminal connection connecting element (8) is embodied as one part with the first terminal connection (9) and/or the second terminal connection connecting element (10) is embodied as one part with the second terminal connection (11).

4. Battery module according to any one of the preceding claims, wherein the first terminal connection (9) is arranged adjacent to the first terminal connection (9).

5. Battery module according to Claim 4, wherein the second terminal connection (11) covers the first terminal connection (9) at least partially.

6. Battery module according to any one of the preceding claims, wherein an insulating layer (20) is arranged between the second terminal connection connecting element (10) and the connection connecting elements (7) and/or between the first terminal connection connecting element (8) and the second terminal connection connecting element (10).

7. Battery module according to any one of the preceding claims, wherein the connection connecting elements (7) and/or the terminal connection connecting elements (8, 10) are at least partially embodied in such a manner that an additional external contact to at least one connection (3; 4) of a battery cell (2) can be established.

8. Battery module according to any one of the preceding claims, wherein the terminal connection connecting elements (8, 10) are covered on the face that is remote from the battery cells by a cover (12).

## Revendications

1. Module de batterie (1), comprenant
- une pluralité de cellules de batterie (2) qui possèdent respectivement une première borne (3) et une deuxième borne (4),
- des éléments de liaison de borne (7) destinées à relier électriquement la pluralité de cellules de batterie (2), chaque élément de liaison de borne (7) reliant une première borne (3) d'une première cellule de batterie (2-i) à une deuxième borne (4) disposée de façon adjacente à une deuxième cellule de batterie (2-(i+1)), et les éléments de liaison de borne (7), du fait de leur épaisseur de matière faible par rapport à leur largeur, étant de configuration plate ;
- une première (9) et une deuxième borne de pôle (11) destinées à relier le module de batterie (1) à un câblage externe ;
- un premier élément de liaison de borne de pôle (8) destiné à relier électriquement la première borne de pôle (9) à un premier pôle (5) du module de batterie (1), le premier pôle (5) étant formé par une première borne (3-1) d'une cellule de batterie de la pluralité de cellules de batterie (2-1), et
- un deuxième élément de liaison de borne de pôle (10) destiné à relier électriquement la deuxième borne de pôle (11) à un deuxième pôle (6) du module de batterie (1), le deuxième pôle (6) étant formé par une deuxième borne (4-12) d'une cellule de batterie de la pluralité de cellules de batterie (2-12),
le premier élément de liaison de borne de pôle (8) étant réalisé de forme plate, et le deuxième élément de liaison de borne de pôle (10) étant lui aussi réalisé de forme plate et disposé de telle sorte que sa surface s'étend en étant espacée et parallèle aux surfaces des éléments de liaison de borne (7) et parallèle à la surface du premier élément de liaison de borne de pôle (8) et recouvre au moins dans des zones partielles les surfaces des éléments de liaison de borne (7) et la surface du premier élément de liaison de borne de pôle (8), et en ce que le deuxième élément de liaison de borne de pôle (10), lors du fonctionnement du module de batterie (1), est traversé par un courant dont la direction est l'inverse à un sens de circulation du courant dans les éléments de liaison de borne (7) et le premier élément de liaison de borne de pôle (8), ce qui a pour effet que les champs magnétiques qui en résultent se compensent au moins pour l'essentiel.

2. Module de batterie selon la revendication 1, la surface du deuxième élément de liaison de borne de pôle (10) recouvrant entièrement les surfaces des éléments de liaison de borne (7).

3. Module de batterie selon la revendication 1 ou 2, le premier élément de liaison de borne de pôle (8) étant réalisé d'un seul tenant avec la première borne de pôle (9) et/ou le deuxième élément de liaison de borne de pôle (10) d'un seul tenant avec la deuxième borne de pôle (11).

4. Module de batterie selon l'une des revendications précédentes, la première borne de pôle (9) étant disposée de façon adjacente à la deuxième borne de pôle (11).

5. Module de batterie selon la revendication 4, la deuxième borne de pôle (11) recouvrant la première borne de pôle (9) au moins dans une zone partielle.

6. Module de batterie selon l'une des revendications précédentes, une couche isolante (20) étant disposée entre le deuxième élément de liaison de borne de pôle (10) et les éléments de liaison de borne (7) et/ou entre le premier (8) et le deuxième élément de liaison de borne de pôle (10).

7. Module de batterie selon l'une des revendications précédentes, les éléments de liaison de borne (7) et/ou les éléments de liaison de borne de pôle (8, 10) étant au moins partiellement configurés de telle sorte qu'une mise en contact externe supplémentaire avec au moins une borne (3 ; 4) d'une cellule de batterie (2) est possible.

8. Module de batterie selon l'une des revendications précédentes, les éléments de liaison de borne de pôle (8, 10) étant recouverts par un couvercle (12) sur le côté à l'opposé des cellules de batterie.
